# EUROPEAN PATENT APPLICATION

(11) **EP 3 985 291 A1**
(43) Date of publication of application: **20.04.2022**
(21) Application number: 20425043.5
(22) Date of filing: 16.10.2020
(51) Int. Cl.: F16L 13/14

(54) **JOINT FITTING FOR PIPES AND PROCEDURE FOR MAKING THIS FITTING**

(71) Applicant: Eurotubi Europa S.r.l., 20122 Milano (MI) (IT)
(72) Inventor: Simini, Luca, 20162 Milano (IT)
(74) Representative: Tansini, Elio Fabrizio

(57) **Abstract**

**ABSTRACT**

Joint fitting for pipes, comprising: a substantially annular body having at least one access end for a terminal portion of a respective pipe to be joined; said access end of the annular body having at least one fluid-seal gasket interposed between an inner surface of the body and an outer surface of the pipe; said access end being configured to undergo a radial plastic deformation action defining a stable coupling condition between the inner surface of the annular body and the outer surface of the pipe; said inner surface of the annular body having at least one knurled portion configured, in the plastic deformation condition of the access end, to fold the outer surface of the pipe and engage the pipe itself to the annular body.

## Description

The present invention relates to a joint fitting for pipes and a procedure for making this fitting. In more detail, the present invention finds particular application for joining together pipes of any type and thickness, by means of pressing the fitting on the pipes themselves.

As is known, joints known as press fittings are used to permanently connect pipes together.

In particular, these joints consist of a tubular fitting, which may have different configurations as a function of the particular geometry which the joint must define. For example, the fitting may be linear for coupling pipes arranged along the same longitudinal axis or may be curved or "T"-shaped to position the pipes with respective longitudinal transverse extensions therebetween.

Each end of the fitting is fitted into that of the respective pipe to be connected and radially closed thereon with a suitable tool capable of plastically and permanently deforming the ends.

The fitting also has an annular gasket or "O-ring" at an inner surface which, when the end of the fitting is deformed on the end of the pipe, adheres to the outer surface of the pipe to prevent the outflow of the fluid (liquid or gas) flowing in the pipes.

The tool for the plastic deformation of the fitting on the pipe typically consists of a pair of jaws positionable on the opposite side of the end of the fitting to close an annular portion of the fitting itself on the pipe.

The jaws can be manually operated by the operator to act with a predetermined shape and adapted to sufficiently deform the fitting and the pipe, defining the mechanical and hydraulic seal thereof.

For this purpose, the jaws have an annular surface in contact with the fitting suitably counter-shaped to the shape of the fitting itself so as to be able to act on the end of the fitting which incorporates a containment chamber of the annular gasket.

However, the "press fitting" joint systems have important limits of use and can be improved in several aspects, in particular for the fluid sealing capacity with thick pipes.

In fact, in order to be able to define an optimal plastic deformation between the fitting and the pipe, it is necessary to use fittings and pipes having reduced thicknesses and easily deformable together by means of the tool.

In this context, the use of high thickness pipes makes it difficult, if not impossible, to use such a joining technique.

To overcome this drawback, fittings capable of mechanically joining pipes also of increased thickness are used.

An example of this type of fitting is illustrated in WO 201089188 A1 related to a fitting provided internally with a semicircular body ("C"-shaped) adapted to engage the outer surface of the pipe.

In particular, a fitting is described which is provided internally with an annular containment chamber of the semicircular body arranged adjacent to the containment chamber of the gasket.

The semicircular body is provided with a series of teeth protruding radially inwardly (towards the pipe) of the fitting.

In this manner, following the compression action of the jaws, the fitting is deformed and the semicircular body is tightened around the pipe, partially penetrating the teeth inside the outer surface of the pipe.

In this manner, the semicircular body which is engaged inside the fitting defines a mechanical constraint with the pipe, avoiding deforming, if not only superficially, the pipe itself.

This solution, although capable of allowing the stable coupling also of pipes of high thickness and therefore not deformable, nevertheless has important drawbacks.

First, the Applicant has observed that the fittings provided internally with the aforementioned semicircular toothed body are structurally very complex given the presence of this body.

In fact, it should be noted that once the semicircular toothed body is made, it must be inserted inside the fitting which is shaped precisely for the purpose of housing the respective semicircular body.

This implies a very complex structure of the fitting which during production must be suitably shaped to provide the annular housing seat of the semicircular body.

In addition, during production the fitting must undergo one or more additional steps of positioning the semicircular body in the respective annular seat.

In this regard, it should be considered that the fitting may have two or more pipe housing ends and therefore the positioning action of the semicircular body is repeated a number of times equal to the number of ends of the fitting.

As a result, this type of fitting is structurally very complex and has high production costs.

A further important drawback of the known technique is the size of the tool which must complete a very high compressive force in order to deform the fitting and at the same time tighten the semicircular body to penetrate the teeth on the surface of the pipe.

This drawback also has a considerable disadvantage in terms of ease of use, structural simplicity of the jaws and production costs.

Finally, a further important drawback is due to the poor versatility of the known fittings which, although usable with thick pipes, are unusable with thinner pipes. In fact, in the case of pipes of low thickness, the penetrating action of the teeth can pierce the surface of the pipe, causing the leakage of fluid.

The object of the present invention is therefore to provide a fitting capable of overcoming the drawbacks of the known art described above.

In particular, an object of the present invention is to provide a structurally simple and therefore particularly inexpensive fitting, capable of ensuring a stable coupling with the pipe. In addition, an object is to propose a versatile fitting in that it is usable with pipes of any thickness, both high and particularly low, while still ensuring the fluid seal thereof.

Furthermore, another object of the present invention is to propose a fitting which is simple in the pressing operations thereof obtained by means of clamps of known type.

Finally, an object is to provide a procedure for making fittings which is simple and capable of providing the fitting with the features necessary to ensure the coupling with the pipe.

These and other objects are achieved by a joint fitting for pipes and a procedure for making this fitting in accordance with the present invention.

In particular, according to a first aspect of the present invention the tubular fitting has at least one access end for a terminal portion of a respective pipe to be joined. The access end of the fitting has at least one fluid-seal gasket interposed between an inner surface of the fitting and an outer surface of the pipe. The fitting further comprises an embossed or knurled inner surface defining reliefs configured to at least partially insert in the outer surface of the pipe to mechanically constrain the fitting to the pipe. The embossed or knurled surface may be continuous or interspersed on the inner surface of the fitting.

In accordance with one aspect, the invention further relates to a procedure for making the fitting which comprises at least one step of inserting a machining tool for plastic deformation or material removal configured for making the embossed or knurled surface.

Further features and advantages will become more apparent from the detailed description of a preferred, yet not limiting, embodiment of a joint fitting for pipes according to the present invention.

Such description will be set out hereinafter with reference to the accompanying drawings given only for illustrative and, therefore, non-limiting purpose, in which:
- figures 1a and 1b show perspective views of two different embodiments each related to a joint fitting for pipes in accordance with the present invention;
- figures 2a and 2b show perspective and sectional views of the fittings illustrated respectively in figures 1a and 1b;
- figures 3a, 4a and 5a show side and sectional views of a respective operating sequence of joining a pipe by means of the fitting of figure 1a object of the present invention; and
- figures 3b, 4b and 5b show side and sectional views of a respective operating sequence of joining a pipe by means of the fitting of figure 1b object of the present invention.

With reference to the accompanying figures, 1 refers globally to a joint fitting for pipes according to the present invention.

In particular, the present invention finds use in various types of pipes 2 which are used to make systems for the passage of fluids such as water or gas and other combustible liquids.

The present invention is applicable and achieves the intended objects regardless of the type of pipe 2 used, both in terms of materials and dimensions.

However, the Applicant has found important advantages in the use of the fitting 1 in accordance with the present invention for joining pipes, according to the standards in the United States, of the "black iron pipe" type ASTM A53, A106, A135 and A795 schedule 5 - schedule 40 and, according to the standards in Europe, black, galvanized or painted steel pipes which refer to the following standards: UNI EN 10255, UNI EN 10220/10216-1, UNI EN 10220/10217-1.

These pipes can have nominal diameters starting from 10 mm, and nominal external diameters starting from 17.2 mm.

Furthermore, such pipes have a high thickness and preferably comprised from 1, 8 to 16 mm.

In addition, the pipes may have a surface finish adapted to confer greater protection to the pipes themselves. The surface coatings may be of any known type.

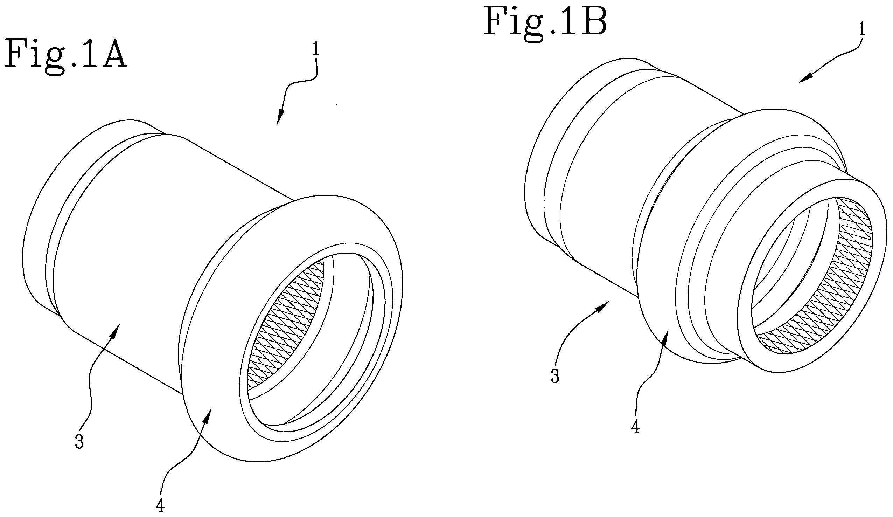

As best illustrated in figures 1a and 1b, the fitting 1 has a tubular structure defined by a substantially annular body 3 having at least one access end 4 for a terminal portion 5 of a respective pipe 2 to be joined.

The annular body 3, which has a circular transverse profile, may be of the "V" profile type as illustrated in figures 1a, 2a,3a, 4a and 5a or of the "M" profile type as illustrated in figures 1b, 2b, 3b, 4b and 5b.

The annular body 3 may have any size as a function of the specific use and may be made of different materials, such as austenitic, ferritic, cast iron, carbon and copper alloys.

Further, the body 3 may be straight in extension and thus extend along a same longitudinal axis, or it may define an angle or coupling curve between two pipes 2 transverse to each other and have different shapes.

In addition, the body 3 may have only one access end 4 for joining a pipe 2 (as illustrated by way of example in the accompanying figures), or may have two opposite access ends 4. In some embodiments, the fitting 1 may have a "T"-profile for connecting three pipes 2. In this case, for each pipe there is an access end 4 of the respective pipe 2.

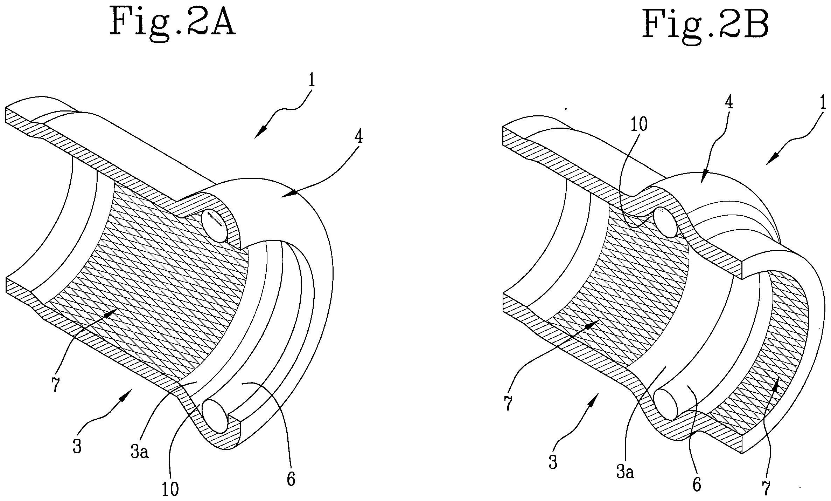

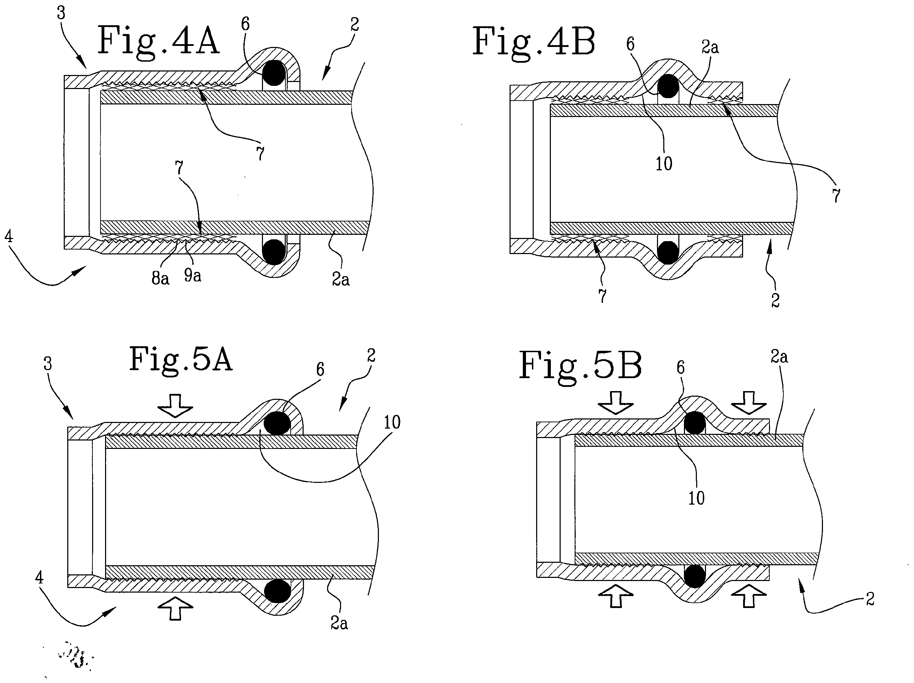

The access end 4 is configured to undergo a radial plastic deformation action defining a stable coupling condition between the inner surface 3a of the annular body 3 and the outer surface 2a of the pipe 2 (figures 5a, 5b). Preferably, as best illustrated in the sectional views of figures 2a and 2b, each access end 4 further has at least one fluid-seal gasket 6 configured to be interposed between an inner surface 3a of the annular body 3 and an outer surface 2a of the pipe 2.

Advantageously, the inner surface 3a of the annular body 3 has at least one knurled portion 7 configured, in the plastic deformation condition of the access end, to fold the outer surface 2a of the pipe and engage the pipe itself to the annular body 3.

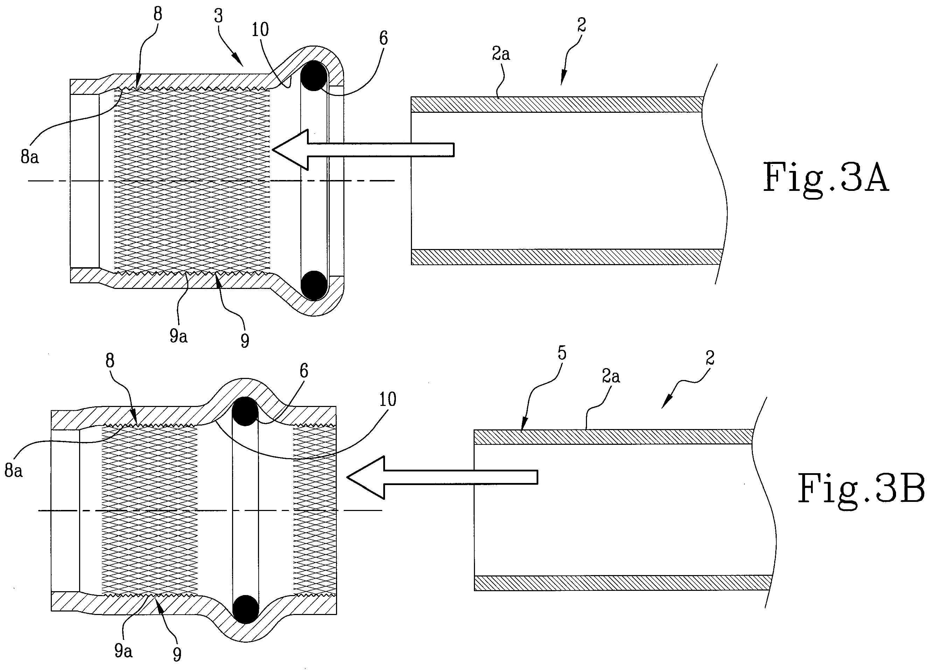

In greater detail, as best illustrated in the sectional views of figures 3a - 5a and 4b - 5b, the knurled portion 7 comprises a series of reliefs 8 constituting "peaks" emerging from the inner surface 3a of the annular body 3. The reliefs 8 are alternated with a series of grooves 9 recessing with respect to the aforementioned inner surface 3a.

In this manner, an embossed or knurled profile is obtained as a function of the specific manufacturing needs. This profile may be determined by a series of pyramidal, conical, or other reliefs 8, also irregular, adapted to define a "peak" shape. The reliefs 8 may be equally spaced or unevenly distributed on the respective knurled portion 7. Similarly, the grooves 9 separating and defining the aforementioned reliefs 8 may have a constant or variable dimension on the inner surface 3a in order to define a specific geometry in the knurled portion 7. More specifically, each relief 8 has a substantially "wedge" shape defining an end 8a distal from the inner surface 3a of the annular body 3, tapered and with decreasing section. In this manner, the end 8a of each relief 8 is configured to strike the outer surface 2a of the pipe 2 in order to mechanically constrain the pipe 2 itself.

Similarly, the grooves 9 also have a substantially "wedge" shape defining an end 9a close to the inner surface 3a of the annular body 3, tapered and with decreasing section. In this manner, the grooves 9 are configured to receive by plastic deformation respective projections of the outer surface 2a of the pipe 2 to mechanically constrain the pipe 2 itself.

In accordance with the embodiment of figure 1a - 5a, the knurled portion 7 is arranged downstream of the gasket 6 with respect to the direction of insertion of the pipe 2 into the access end 4.

Instead, with reference to the solution of figure 1b - 5b, the knurled portion 7 is both upstream and downstream of the gasket 6 with respect to the direction of insertion of the pipe 2 into the access end 4. However, the presence of the knurled portion 7 may also be provided for this embodiment only upstream or downstream of the gasket 6 with respect to the direction of insertion of the pipe 2.

Furthermore, a plurality of knurled portions arranged along respective annular zones of the access end 4 and arranged on opposite parts of the gasket 6 may be provided.

Alternatively, the knurled portions 7 may be alternated with each other, and thus separated, both longitudinally and circumferentially along the inner surface 3a of the annular body.

Advantageously, the fluid-seal gasket 6 is housed in an annular chamber 10 obtained in the access end 4 and configured, in the plastic deformation condition of the access end (figure 5a, 5b), to deform and compress the gasket 6 contained therein on the outer surface 2a of the pipe 2.

The plastic deformation action of the end 4 on the pipe 2 is carried out by a pressing tool not illustrated in the accompanying figures, as it is not part of the present invention.

The tool, provided with suitable jaws, is configured to implement a radial plastic deformation action on the access end 4 illustrated in figures 5a and 5b. This compression action defines a stable coupling condition between the fitting 1 and the respective pipe 2 in which there is a fluid and mechanical seal.

In this situation, as specified above, the deformation action leads the reliefs obtained in the knurled portion 7 to fold the pipe 2, defining a stable constraint therewith.

It should be noted that the plastic deformation action is only carried out on the access end 4 of the body 3 without therefore deforming the pipe 2.

That is, the deformation action alone bends the body 3 thereby leaving the section of the pipe 2 unchanged (not crushed). The only interference action of the knurled portion 7 only scratches the pipe 2 superficially to implement the mechanical coupling.

However, in the case of thin pipes, it is also possible to provide a deformation of the pipe, thus ensuring a greater mechanical seal.

The present invention further relates to a procedure for making the joint fitting 1 for pipes 2 described above.

The procedure comprises the steps of preparing the substantially annular body 3 having at least one access end 4 for a terminal portion 5 of a respective pipe 2 to be joined; and inserting at least one fluid-seal gasket 6 inside a respective annular chamber 10 obtained in the access end 4.

Advantageously, the procedure comprises the step of arranging an inner surface 3a of the access end 4 configured to undergo a radial plastic deformation action defining a stable coupling condition on the pipe to be joined 2.

Advantageously, the step of preparing the inner surface 3a is carried out by means of a step of knurling at least a portion 7 of said surface 3a.

In accordance with a first possible embodiment, the knurling step is carried out by inserting in the access end a knurling tool which implements a plastic deformation of the inner surface 3a of said annular body 3.

In this situation, the knurling tool is preferably made in the form of a cylindrical roller provided with a cross-toothed surface for defining the reliefs 8 alternating with the grooves 9. Accordingly, the plastic deformation action is implemented by rotating the knurling tool on the inner surface 3a of the annular body 3.

In this case, the plastic deformation does not change the inner shape and size of the annular body 3, but acts only on the inner surface 3a by means of a displacement of material generally between 1 and 2 mm, and not more than 50% of the thickness.

According to a further embodiment, the knurling step is carried out by removing material, by making cross-grooves on the inner surface 3a of the annular body 3.

In this case, the machining is carried out by means of tools mounted on numerically controlled axes which implement the engraving on the inner surface 3a and according to predetermined paths.

Further machining and engraving techniques of the knurled portion 7 may be used in particular for annular bodies 3 of small diameters. For example, laser or plasma sources may be used.

The present invention therefore solves the problems of the prior art and has many important advantages.

First, the fitting 1 is usable for pipes 2 of any thickness, as it does not act on the deformation of the pipe 2 itself and does not include the use of particularly prominent reliefs and therefore potentially capable of piercing pipes of limited thickness.

Advantageously, the fitting 3 (with both a "V" and "M" profile) is therefore very versatile for any pipe which must be joined.

In addition, the fitting 1 is structurally simple and particularly inexpensive, as there are no collars included which are provided with reliefs or other additional parts inside the fitting 1 itself. In other words, the fittings are not modified in the structure thereof compared to those normally used in the "press fitting" joint used for pipes of different sizes.

The only step of making the knurled portion 7 does not therefore affect the structure of the fitting 1 and the ease of use thereof.

However, the presence of the knurled portion 7 determines a stable folding, which ensures a mechanical and fluid seal with the respective pipe 2 to be joined.

## Claims

1. Joint fitting for pipes, comprising:
- a substantially annular body having at least one access end for a terminal portion of a respective pipe to be joined;
- said access end of the annular body having at least one fluid-seal gasket interposed between an inner surface of the body and an outer surface of the pipe;
- said access end being configured to undergo a radial plastic deformation action defining a stable coupling condition between the inner surface of the annular body and the outer surface of the pipe;
**characterized in that** said inner surface of the annular body has at least one knurled portion configured, in the plastic deformation condition of the access end, to fold the outer surface of the pipe and engage the pipe itself to the annular body.

2. Fitting according to the preceding claim, **characterized in that** said knurled portion comprises a series of reliefs emerging from the inner surface of the annular body and alternating with a series of grooves recessed with respect to said inner surface.

3. Fitting according to the preceding claim, **characterized in that** each relief has a substantially "wedge" shape defining an end distal from the inner surface of the annular body, tapered and with decreasing section; said end being inserted into the outer surface of the pipe to mechanically constrain the pipe itself.

4. Fitting according to claim 3, **characterized in that** said grooves have a substantially "wedge" shape defining an end close to the inner surface of the annular body, tapered and with a decreasing section; said grooves receiving by plastic deformation respective projections of the outer surface of the pipe to mechanically constrain the pipe itself.

5. Fitting according to any one of the preceding claims, **characterized in that** said knurled portion is arranged upstream of the gasket with respect to the direction of insertion of the pipe in the access end.

6. Fitting according to any one of claims 1 to 4, **characterized in that** said knurled portion is arranged downstream of the gasket with respect to the direction of insertion of the pipe into the access end.

7. Fitting according to any one of the preceding claims, **characterized in that** it comprises a plurality of knurled portions arranged along respective annular zones of said access end and arranged on opposite sides of the gasket.

8. Fitting according to any one of the preceding claims, **characterized in that** it comprises a plurality of knurled portions, alternating with each other both longitudinally and circumferentially along the inner surface of the annular body.

9. Fitting according to any one of the preceding claims, **characterized in that** said fluid-seal gasket is housed in an annular chamber obtained at said access end and configured, in the plastic deformation condition of the access end, to deform and compress the gasket contained therein on the outer surface of the pipe.

10. Procedure for making a joint fitting for pipes, comprising the steps of:
- arranging a substantially annular body having at least one access end for a terminal portion of a respective pipe to be joined; and
- inserting at least one fluid-seal gasket inside a respective annular chamber obtained in said access end;
- arranging an inner surface of the access end configured to undergo a radial plastic deformation action defining a stable coupling condition on the pipe to be joined;
**characterized in that** said step of arranging the inner surface is carried out by means of a knurling step of at least a portion of said surface, said knurled portion in the plastic deformation condition of the access end folding the outer surface of the pipe to be joined.

11. Procedure according to the preceding claim, **characterized in that** said knurling step is carried out by inserting in the access end a knurling tool which implements a plastic deformation of the inner surface of said annular body.

12. Procedure according to the preceding claim, **characterized in that** said knurling tool is in the form of a cylindrical roller provided with a cross-toothed surface; said plastic deformation being implemented by rotating the knurling tool on the inner surface of the annular body.

13. Procedure according to claim 10, **characterized in that** said knurling step is implemented by removing material, by making cross-grooves on the inner surface of said annular body.
